Europäisches Patentamt

European Patent Office

Office européen des brevets

(19)

(11) Publication number : **0 149 528**
**B1**

(12) **EUROPEAN PATENT SPECIFICATION**

(45) Date of publication of patent specification :
21.10.87

(21) Application number : 85300156.8

(22) Date of filing : 10.01.85

(51) Int. Cl.⁴ : **E 21 B   7/26**, E 21 B   7/28,
**F 16 L 55/18**

(54) **Device for replacing mains...**

(30) Priority : **19.01.84 GB 8401452**

(43) Date of publication of application :
**24.07.85 Bulletin 85/30**

(45) Publication of the grant of the patent :
**21.10.87 Bulletin 87/43**

(84) Designated contracting states :
**BE DE FR IT NL**

(56) References cited :
**EP-A- 0 086 567**
**GB-A- 2 137 719**
**US-A- 2 951 681**
**US-A- 3 185 225**
**US-A- 3 354 969**
**US-A- 3 926 267**

(73) Proprietor : **British Gas Corporation**
**Rivermill House 152 Grosvenor Road**
**London SW1V 3JL (GB)**

(72) Inventor : **Wayman, Malcolm**
**24 Linden Way Darras Hall**
**Ponteland Newcastle-upon-Tyne (GB)**
Inventor : **Mood, Geoffrey ingies**
**6 Briar Avenue**
**Whiteley Bay Tyne & Wear (GB)**

(74) Representative : **Cummings, Robert James et al**
**British Gas Corporation Research & Development**
**Division One Line Inspection Centre P.O. Box 3**
**Cramlington, Northumberland NE23 9EQ (GB)**

Jouve, 18, rue St-Denis, 75001 Paris, France

EP 0 149 528 B1

## Description

The invention relates to the replacement or the preparation for replacement of an existing main, conduit, pipe or the like, hereinafter referred to as a « main », particularly an existing cast iron gas main.

Mains often have to be replaced for one or more of several reasons, for example the existing main may be deteriorating so that it is in poor condition and liable to failure, or the existing main may not be of sufficient capacity to accommodate a new load.

Usually it is necessary to replace an existing main by using labour which is both costly and time-consuming, particularly if total excavation of the ground is necessary. On the other hand, if a new main is merely inserted in an existing main, it will necessarily have a smaller internal diameter than the existing main and will thus be of smaller gas carrying capacity.

It has been proposed in US-A-3354969 (Ebeling) to advance a drilling machine by forcing first feet against the wall of the borehole by means of a wedge forced by a single-acting hydraulic ram between wedge surfaces on the feet. The wedge is urged in the opposite direction by a compression return spring arranged between the wedge and the machine body. The body has a second set of feet forced permanently by further springs against the wall of the borehole. The compression spring subsequently extends, while the second feet remain stationary, and the compression spring so returns the single-acting piston of the ram. During this return stroke the wedge faces separate and then an abutment on the wedge engages an abutment on the first feet and slides them along the borehole wall. The feet are urged towards inwardly retracted positions away from the wall of the passage by leaf springs. Only a relatively small amount of relative motion is possible between the wedge and the wedge surfaces on the feet, which are separated by rollers. Accordingly, the utilisation of the ram stroke is inefficient because a substantial part of the stroke is ineffective owing to lost-motion between the wedge and the wedge surfaces on the feet and because of the need repeatedly to move the feet into engagement with the wall of the passage.

It has been proposed in US-A-3185225 (Ginies) to advance a drilling machine by forcing two sets of feet on hinged bars alternately against the borehole wall by respective single-acting hydraulic rams. The rams are mutually interconnected by a cable and pulley system so that the power stroke of either ram returns the piston of the other, keeping the two rams synchronised. Each set of bars has a return spring having the same disadvantage as already explained.

In such an arrangement the feet are effective only when the inclination of the bars is in a range beyond a critical angle. For practical purposes, variations in the diameter of the passage will cause the inclination of the bars increase or to decrease to values at which the bars are not effective to lock the feet against the wall and the feet then slip.

In neither of those proposals are the active feet biased by a spring towards the borehole wall. In both proposals the construction is very complicated and not suited to operations in gas mains, sewers, water mains or the like where space is very restricted and the duty is very arduous.

The object of the invention is to reduce or eliminate those disadvantages of the previous proposals.

According to the present invention, apparatus for self-propelled movement through a passage comprises a tool advanced by feet alternately forced against the wall of the passage by wedge faces and moved along the wall under the action of hydraulic ram means and is characterised in that the feet carry respective wedge faces which are in sliding engagement with each other and further characterised in that a spring keeps the feet in engagement with the wall of the passage and thus keeps the wedge faces mutually engaged.

Apparatus embodying the invention is hereinafter described, by way of example, with reference to the accompanying drawings, in which :

Figures 1A and 1B show respective sections through a main with apparatus for self-propelled passage along the interior of the main and a breaker device, Figures 1A and 1B showing part of the same main which is split at line A-A for clarity ;

Figure 2 shows to a larger scale than Figures 1A and 1B, one embodiment of vibratable breaker device in longitudinal cross-section ;

Figure 3 shows to a larger scale than Figure 2 a second embodiment of vibratable breaker device in part longitudinal section ;

Figure 4 shows the device of Figure 3 in situ in a main in side elevation ;

Figure 5 shows a connection of a breaker device in this case like that of Figure 2, with a new main and/or liner ; and

Figure 6 shows a hydraulic circuit for use with apparatus according to the invention.

Figures 7 and 7A shown on a larger scale than the other Figures respectively a longitudinal cross-sectional view and an end view partly in transverse section of a device forming part of the apparatus shown in Figures 1A and 1B ;

Figures 8A and 8B which are shown to a larger scale than Figures 1A to 6 and are split at line B-B respectively show a longitudinal sectional view of a further embodiment of a breaker device ; and Figure 8C is a transverse sectional view along lines C-C of Figure 8B.

Figures 9 and 10 show respective schematic perspective and longitudinal sectional views of a yet further embodiment of the breaker device ; and

Figure 11 shows schematically a further hydraulic circuit for operating the apparatus shown in Figures 7 & 7A including the breaker device of Figure 8.

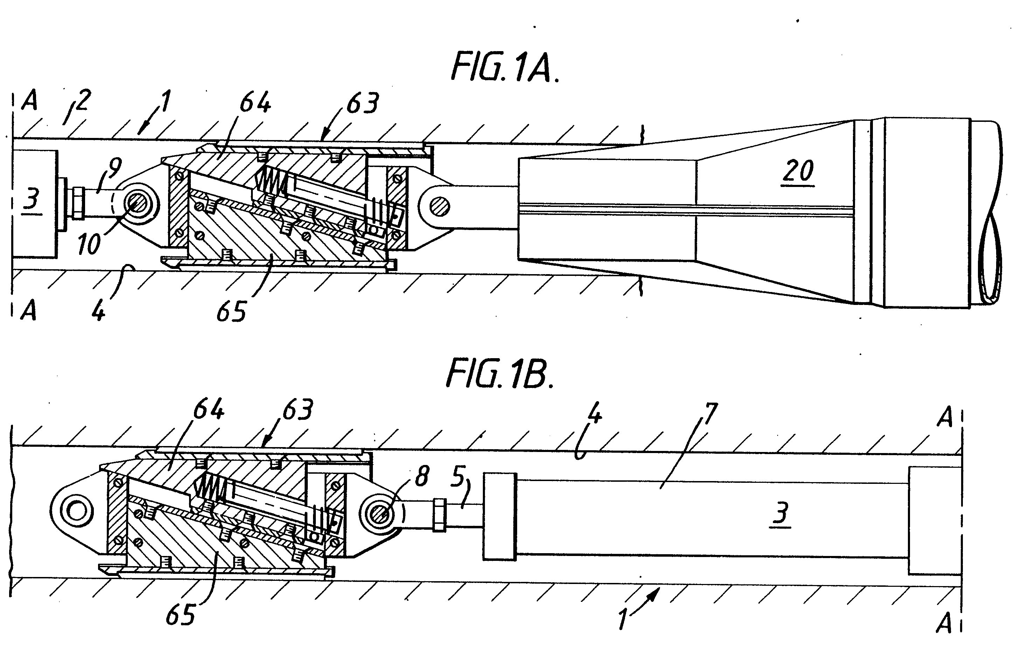

Figures 1A and 1B show apparatus 1 for passage along the interior of a main 2 comprising a train of elements connected together by pivotal connections. The leading element is a device 63 (Figure 1B) having feet engaging the wall 4 of the main ; the next element in the form of a hydraulic ram 3 having a piston rod 5 connected to the leading element 63. The ram cylinder 7 is connected to another intermediate element which is a second device 63 identical to the first device. The trailing element is a tool 20, of one of the kinds described in more detail below.

In use, the feet 64, 65 can slide along the main 2 in a forward direction only. Any loading of the devices 63 in the reverse direction locks the feet against the wall 4 of the main 2 to prevent further movement. Therefore as the ram 3 extends to the left in Figure 1B the rear feet lock to prevent any reverse movement while the front feet (Figure 1A) slide forward. Alternate movement of this kind causes the apparatus 1 to « walk » through the main 2 and to tow anything attached to its rear end such as a breaker device 20.

The apparatus 1 could be used to tow through a main any suitable article such as a new main, a cable, etc and indeed any kind of device which would break open a main and replace it with a new one (not just the devices described).

Furthermore the rear device 63 can be eliminated where the apparatus 1 is used to break open a main 2 in combination with a breaking device. In the apparatus 1 the rear device 63 provides the necessary resistance to backwards movement during a forward stroke of the cylinder 7. It would not be eliminated where the apparatus is being used to tow light equipment through the main. However during mains replacement the breaker device 20 itself will provide sufficient resistance to rearward movement because it will be securely trapped in the main 2.

Alternatively it may be possible to provide resistance to rearward movement by applying a restraining force in a launch pit from where the apparatus and breaker device are launched. This could be done for example using a ratcheted roller assembly. The resulting reduction in the overall length of the system would be benificial.

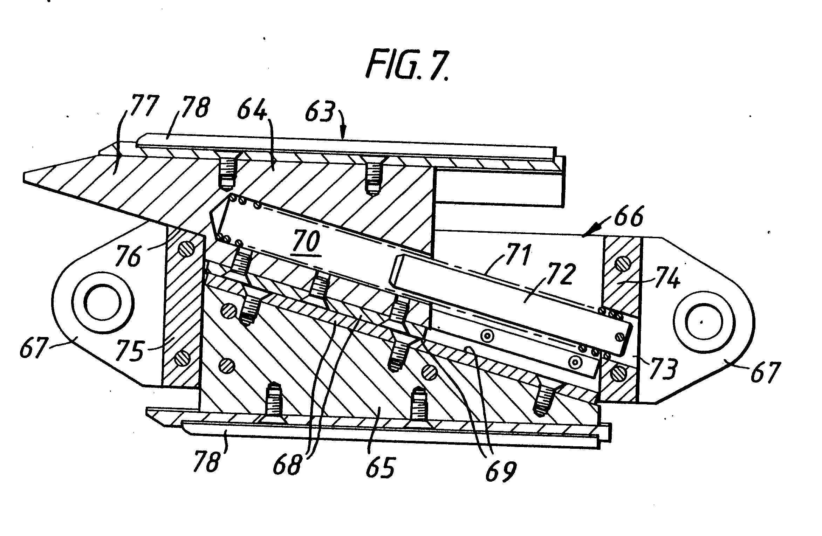

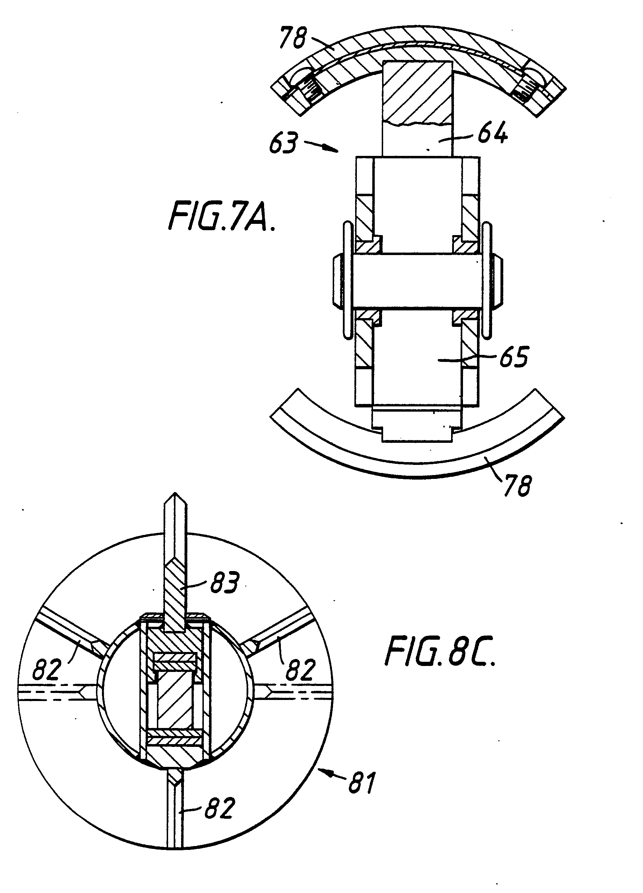

Figures 7 and 7A show one of the devices 63 in more detail and removed from the main, so that its feet, described below, are free to separate radially as far as possible. The devices are the same and each comprises two feet 64, 65 and a body 66 with shackles 67 at each end for connection to the piston rod 5 or the cylinder 7 by means of pins 8 or 10 (Figures 1A and 1B). The feet 64, 65 are of curved profile for engaging the interior surface of the wall of the main 2. As shown in Figures 1A and 1B the foot 64 occupies a position closer to the foot 65 when the device is positioned in the main. The feet 64, 65, each have an inclined support plate 68 presenting a surface 69 in sliding contact with the opposite surface 69. One foot 64 has a bore 70 in which is mounted a compression spring 71 engaged around a guide pin 72. The pin is mounted in a bore 73 in an end wall 74 of the body 66. One end of the spring 71 is received in the bore 73.

An end wall 75, opposite the wall 74, has an inclined surface which guides a nose 77 projecting from the foot 64.

The feet 64, 65 slide relatively to each other and the surfaces 69 are held in contact with the wall of the main, and in contact with each other, by the spring 71. Each foot has a polyurethane pad 78 for engaging the wall of the main.

To move the device 63 along the main from right to left as seen in Figure 1A or 1B it is merely necessary to apply to the body 66 sufficient longitudinal force (acting from right to left) to overcome frictional resistance. The foot 65 slides slightly leftwards relatively to the foot 64 along the surfaces 69 against the action of the spring 71. The pad 78 remains in contact with the wall of the main under the action of the spring 71 but the load applied by the respective foot (normal to the wall) is reduced to the point where the frictional resistance to movement of the pad 78 along the wall becomes negligible.

When a longitudinal force is applied to the body 66 from left to right as seen in Figure 1A or 1B the foot 65 slides slightly to the right relatively to the foot 64 and the load applied by each foot to its pad 78, normal to the wall, increases. The resulting friction between each pad 78 and the wall increases at once to a high value sufficient to prevent movement of the device 63 from left to right.

The extending and contracting movements of the ram 3 impose on the respective body 66 of each device 63 longitudinal forces acting alternatively leftwards and rightwards as seen in Figure 1A or 1B. Accordingly, as the ram 3 extends the device 63 shown in Figure 1B moves to the left while the device 63 shown in Figure 1A remains stationary. Then, as the ram 3 retracts, the device 63 shown in Figure 1A moves to the left, advancing the tool 20, while the device 63 shown in Figure 1B remains stationary.

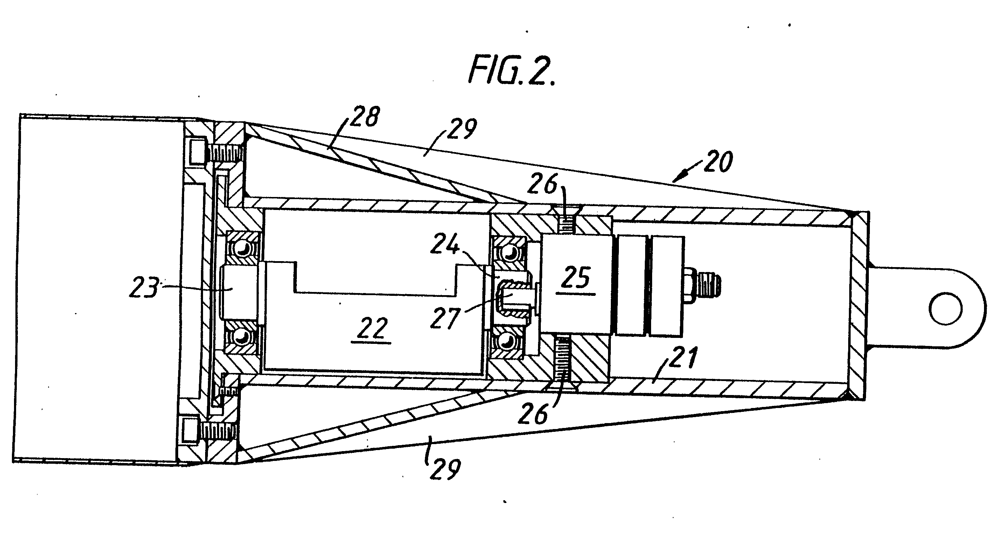

Referring now to Figure 2, there is shown a breaker device like the device 20 shown in Figures 1A and 1B.

The device 20 comprises a tubular body 21 housing a weight 22 which is eccentrically mounted and is rotatable on stub shafts or axles 23 and 24 by means of a motor 25 also housing in the body, by means of screws 26. A driving shaft 27 of the motor 25 is in driving engagement with the axle 24. The rear of the body 21 is enclosed by a frusto-conical outer steel shell 28, the body and shell being secured by screws. Also secured between the body 21 and the shell 28 are four steel blades 29 to cut the main.

In use as the breaker device 20 is towed through the main by the apparatus 1 which comprises a traction unit, the weight 22 is rotated on its axis and causes the conical section 28 to precess about its axis. This takes the form of a vibration which assists the device 20 in displacing outwardly any material broken up or loosened by the device 20 as it is towed forward.

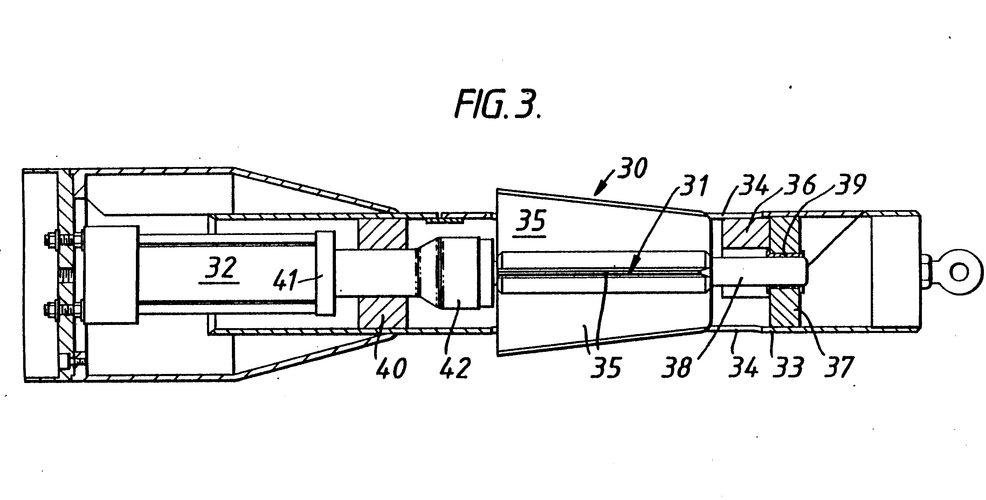

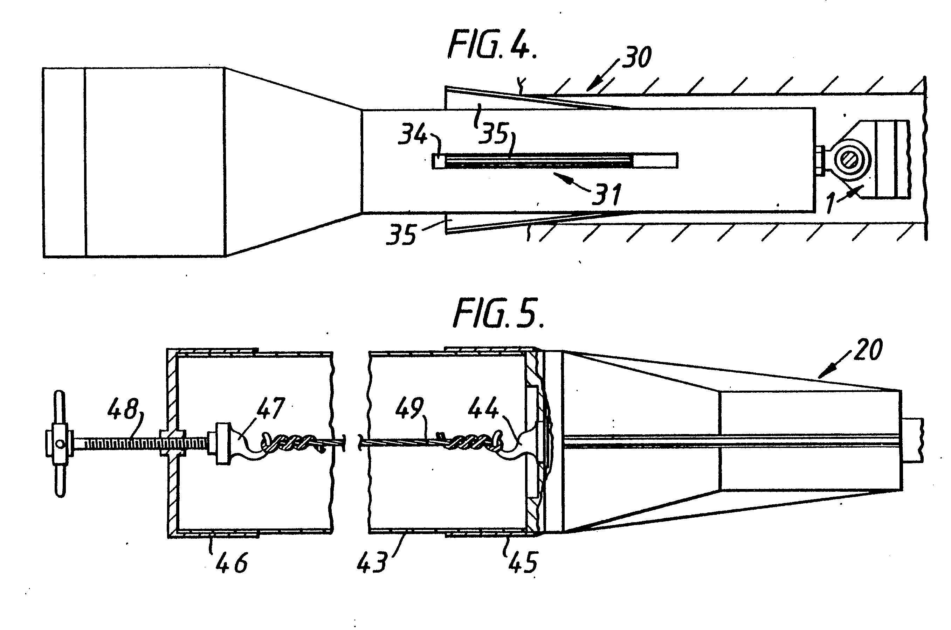

Referring now to Figures 3 and 4, there is shown an alternative breaker device 30 comprising a percussive breaker device, comprising a breaking head 31 which is actuated by an hydraulic ram 32. The head 31 is housed in a cylindrical casing 33 in which there are slots 34 through which extend four steel breaker blades 35 which are short enough for the blades to be reciprocable within the slots 34.

In use the head 31 impacts against a resilient pad 36 held against an annular bush 37 so that the head 31 rebounds backwards after a forward stroke. The head 31 has a guide pin 38 which slides within a bearing 39 in the bush 37. As with the conical breaker device 20, the percussive breaker device 30 is towed forward by the traction unit 1. A piston (not shown) within the ram 32 moves a body 42 which impacts the head 31, the body 32 being mounted within an annular mounting 40.

Either main breaker device 20 or 30 can be secured to a new main and/or liner 43, as shown in Figure 5 which shows a breaker unit 20 including attachment means for the new main/or liner 43. The attachment means comprise a rearwardly extending connector in the form of a hook element 44 and clamping means in the form of a cylindrical cup 45, there being a similar, facing clamping cylindrical cup 46 at the forward end of the new main or liner 43. A rotatable hook element 47 is mounted in the cup 46 by a threaded shaft 48 and a torsional element in the form of a cable 49 is connected between the hook elements 44 and 47. By rotating the shaft 48 the new main or liner 43 is clamped tightly between the two clamping cups 45 and 46 and may then be drawn through the main being broken by the breaker device 20.

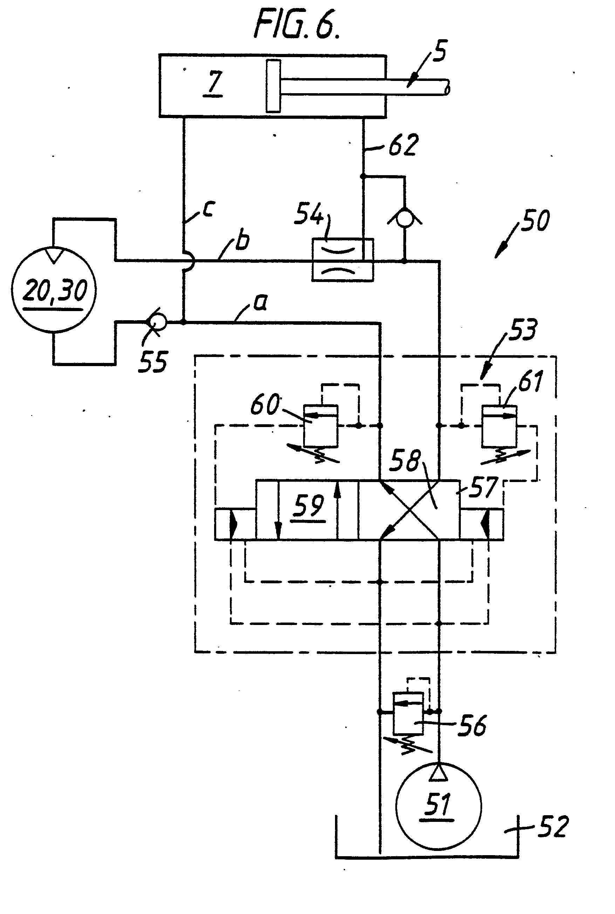

The apparatus 1, that is the ram 3 and the breaker such as 20 or 30 are hydraulically operated. A suitable circuit 50 is shown in Figure 6. Referring to Figure 6 the hydraulic circuit 50 shown provides automatic cycling of the ram 3 in the apparatus 1 and also provides activation of the mains breaking device, 20 or 30. This activation is limited to the contracting stroke of the ram 3 and only when the ram 3 has applied a certain predetermined minimum force to the breaker.

The hydraulic circuit 50 includes a pump 51 and a fluid reservoir 52, a spool valve assembly 53, a priority flow divider 54, a non-return valve 55 and a terminal in the breaker device 20, 30.

The spool valve 53 includes a reversing valve 57 for reversing fluid flow between lines a and b of the circuit 50. The valve 57 moves between positions 58 and 59 to reverse flow. The spool valve 53 also includes two actuating valves 60 and 61, valve 60 causing the valve 57 to change from position 58 to position 59 and valve 61 causing valve 57 to change back from position 59 to position 58. A further actuating valve 56 short circuits the flow when the fluid pressure exceeds $20.7 \times 10^6$ N/m$^2$ (3 000 psi). The valve 60 is actuated at $19.3 \times 10^6$ N/m$^2$ (2 800 psi) and valve 11 is actuated at $18.6 \times 10^6$ N/m$^2$ (2 700 psi). These pressures can be varied to suit requirements.

When the valve 57 is in position 58, the fluid flows via lines a and c into the cylinder 7 but not into the breaker 20, 30. In this case the piston rod 5 advances so that the leading device 63 (Figure 1B) is moved forward while the breaker device 20, 30 is stationary and not actuated.

When the valve 57 is in position 59, fluid flows into the priority flow divider 54 which directs the required flow into the breaker 20, 30 thus actuating the breaker 20, 30. The remaining fluid enters the cylinder 7 via line 62. This causes the cylinder 7 to move to the left as seen in Figures 1A and 1B. Thus the breaker device 20, 30 is pulled forward.

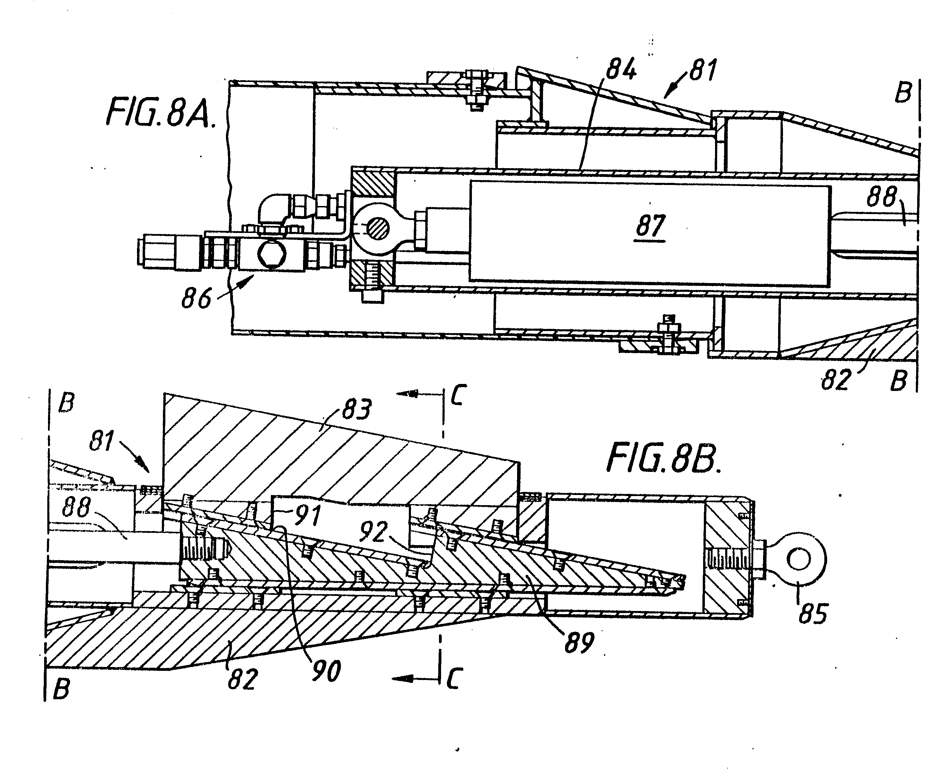

Referring now to Figures 8A, 8B and 8C there is shown a modified breaker device 81 which has three fixed blades 82 and a movable blade 83.

Essentially the breaker device 81 has a substantially cylindrical body 84 having at one a towing eye 85 and at the other hydraulic connection means 86 which is connected to a hydraulic ram arrangement 87 within the body 84, the end 88 of the ram 87 remote from the hydraulic connection 86 being secured to a wedge shaped operating means 89 for the movable blade 83 which has an inclined surface 90 complementary to the wedge. In the position shown the movable blade 83 is fully extended, the wedge 89 having been moved to the right as viewed to drive the movable blade 83 out of the body 84 of the breaker device. The complementary surfaces of the blade and wedge are stepped as shown so that on retraction of the wedge (to the left as viewed, Figure 8) the blade 83 effectively slides over the wedge 89 until stop surfaces 91 and 92 abut, so that the blade 83 is effectively withdrawn into the device until it is ready to be extended again on actuation of the ram arrangement under hydraulic pressure.

The fixed blades 82 may be orientated as shown in full lines (Figure 8C).

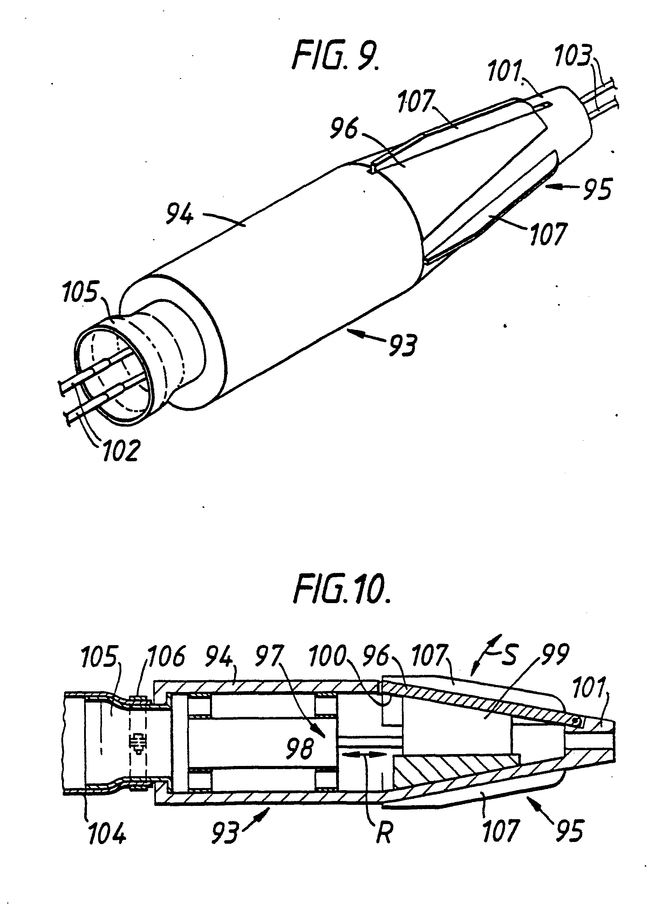

Figures 9 and 10 show another embodiment of breaking device or burster 93. This device 93, has been developed for particular applications for instance where a main to be burst is laid in particularly hard ground or cohesive clay. The device 93 is particularly suitable for such application and comprises a generally cylindrical body 94 having at its forward end a section 95 which is round at the rear (to the left as viewed) and oval at forward (to the right as viewed) end. The upper part 96 (as viewed) of the forward section 95 can be moved radially outwardly (about 18 mm in the embodiment shown) by a reciprocable hydraulic cylinder and ram arrangement 97, the ram 98 having a wedge 99 secured to it, which wedge 99 acts on a complementary inclined surface 100 of the upper part 96 so that as shown in Figure 10 the upper part 96 can be extended outwardly when the wedge 99 moves to the right (as viewed) the forward end of the wedge being received in a housing 101 which prevents ingress of dirt, debris etc. from the ground or mains breaking operation. When the wedge 99, is retracted to the left, the upper part 96 of the forward section 95 automatically retracts under gravity to the Figure 9 position.

The respective movements of the hydraulic cylinder and ram arrangement 97 and upper part 96 are shown by the double headed arrows R and S. The breaking device 93 has hydraulic supply lines102 and hoses 103 to the traction unit, the lines 102 being protected by a sleeve 104 secured. to a rear boss 105 of the device by a clamp 106.

Although a particular shape of forward section of the breaker unit has been described, other shapes such as conical are possible. In every embodiment the forward section . 95 bears a plurality of longitudinally extending sharpened blades 107 on its outer surface, which assist in the ground and/or main breaking operation. This breaking operation is effective because the expansion of the upper part 96 provides a positive crushing force over a relatively large surface area.

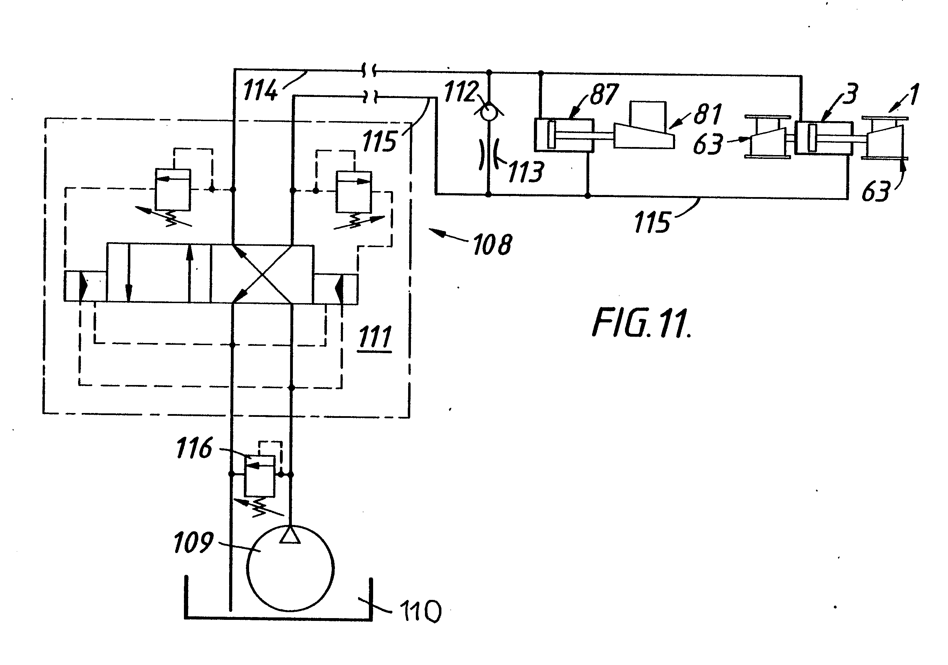

Referring now to Figure 11, there is shown a hydraulic circuit 108 which operates in a similar manner to that of the circuit shown in Figure 6 and which is shown as part of apparatus as shown in Figures 7 & 7A with the movable blade breaking device 81 shown in Figures 8A, 8B and 8C, although it is equally applicable to the breaking device 93 shown in Figures 9 and 10. The circuit 108 includes a hydraulic pump 109, reservoir 110 for fluid, 4 way, 2 position spool valve 111 with integral pressure reversal, non-return valve 112 and flow restrictor 113 and lines 114 and 115 to the traction apparatus 63 and breaker device 81. There is also a main pressure relief valve 116 operating at $20.7 \times 10^6$ N/m² (3 000 psi), the spool valve 111 operating at $18.6 \times 10^6$ N/m² (2 700 psi). The non-return valve 112 and flow restricter 113 are connected across lines 114 and 115, in parallel with the cylinders of the rams 3 and 87, respectively, of the touring apparatus/and the breaker device 81.

The operating sequence of the apparatus is as follows :

Line 114 is pressurised, causing the piston rod 5 of the ram 3 to extend, sliding the front device 63 leftwards which requires only a relatively low hydraulic pressure, sufficient to overcome the friction of the pads 78 on the front feet 64 and 65 sliding on the inside surface of the main (Figures 7 & 7A). The breaker device ram 87 does not extend at this stage since it is used to operate the movable blade against the main wall/fitting etc and therefore requires a much higher operating pressure. Once the piston rod of the ram 3 reaches the fully extended position, the hydraulic pressure in line 114 increases, causing the ram 87 of the breaker 81 to extend toward the right driving the movable blade 83 outwards breaking any pipe, fitting, etc.

This stroke continues until the ram 87 of the breaker is fully extended. In this situation the pressure in line 114 quickly rises to a level sufficient to cause operation of the valve 111.

At this high pressure (around $18.6 \times 10^6$ N/m² but adjustable) the valve switches thereby making line 115 the hydraulic pressure line and line 114 the hydraulic return line.

This reversal of pressure/return line causes the ram 87 of the breaker to retract leftwards, so retracting the movable blade 83 downwards. This requires a low hydraulic pressure and will continue until the ram 87 is fully retracted. The hydraulic pressure in line 115 now increases until it reaches a high enough level to cause the cylinder of the ram 3 to retract to the right, thus pulling the rear device 63 forward i. e. to the right in Figure 11. This stroke also breaks and displaces any remaining large pieces of main etc, displaces the surrounding soil and pulls the sleeve forwards.

During operations in very wet ground conditions water and mud can flow forward into the main during the breaking operation causing the halves to slip. To prevent this a standard 152 mm (6-inch) pig cup may be fitted between the rear traction device and the front of the breaker device to act as a seal. The apparatus I may be used with any of the breaker devices as desired.

**Claims** `

1. Apparatus for self-propelled movement through a passage comprising a tool (20, 30) advanced by feet (64, 65) alternately forced against the wall of the passage by wedge faces (69) and moved along the wall under the action of hydraulic ram means (3) characterised in that the feet (64, 65) carry respective wedge faces (69) which are in sliding engagement with each other and in that a spring (71) keeps the feet in engagement with the wall of the passage and thus keeps the wedge faces (69) mutually engaged.

2. Apparatus according to Claim 1, characterised in that the apparatus comprises at least three elements arranged in a train along the passage and interconnected by pivotal connections (67), the leading element being a set of feet (64, 65), intermediate element being a double-acting hydraulic ram (3) and the trailing element being a tool (20 ; 30 ; 81 ; 93).

3. Apparatus according to Claim 2 characterised in that there are only three elements and the ram (3) is connected directly to the tool (20 ; 30 ; 81) and to the sole set of feet (63).

4. Apparatus according to Claim 2 characterised in that there are four elements, a second set of feet (63) being interconnected between the tool (20 ; 30 ; 81) and the ram (3).

5. Apparatus according to any preceeding claim characterised in that the tool (20) has at its leading end a housing (21) which contains a weight (22) which is rotatable eccentrically by a motor (25) about an axis parallel to the direction of advance of the tool.

6. Apparatus according to any claim of Claims 1 to 4 characterised in that the tool (30) comprises a breaking head (31) actuated percussively by a body (42) driven by a second hydraulic ram (32).

7. Apparatus according to any claim of Claims 1 to 4, characterised in that the tool (81, 93) comprises a formation (83 ; 96) reciprocable transversely of the direction of advance of the tool by a wedge (89, 99) reciprocable parallel to said direction by a further double-acting hydraulic ram (87 ; 98).

8. Apparatus according to Claim 7 characterised in that the two hydraulic rams (3 ; 87 ; 98) are supplied in parallel with hydraulic fluid from a common supply (108, 109) and further characterised in that the first ram (3) operates to advance the tool (81, 93) while the second ram (87 ; 98) operates to retract the wedge (89 ; 99).

**Patentansprüche**

1. Vorrichtung mit Eigenantrieb für eine Vorwärtsbewegung durch einen Kanal, mit einem durch abwechselnd gegen die Wand des Kanals mittels Keilflächen (69) gedrückte Füße (64, 65) vorzutreibenden Werkzeug (20, 30), das entlang der Wand unter Einwirkung einer Hydraulik-Stößeleinrichtung (3) bewegt wird, dadurch gekennzeichnet, daß die Füße (64, 65) entsprechende Keilflächen (69) tragen, die in Gleitverbindung miteinander stehen, und daß eine Feder (71) die Füße mit der Kanalwand und somit die Keilflächen (69) miteinander in Wirkverbindung hält.

2. Vorrichtung nach Anspruch 1, gekennzeichnet durch mindestens drei Elemente, die hintereinander entlang dem Kanal angeordnet und mittels Schwenkverbindungen (67) aneinandergekuppelt sind, wobei das vordere Element ein Satz von Füßen (64, 65) ist, das Zwischenelement ein doppeltwirkender Hydraulikstößel (3) ist und das hintere Element ein Werkzeug (20 ; 30 ; 81 ; 93) ist.

3. Vorrichtung nach Anspruch 2, dadurch gekennzeichnet, daß nur drei Elemente vorgesehen sind und der Stößel (3) direkt mit dem Werkzeug (20 ; 30 ; 81) und mit dem einzigen Satz von Füßen (63) verbunden ist.

4. Vorrichtung nach Anspruch 2, dadurch gekennzeichnet, daß vier Elemente vorgesehen sind, wobei ein zweiter Satz von Füßen (63) sich zwischen dem Werkzeug (20 ; 30 ; 81) und dem Stößel (3) befindet.

5. Vorrichtung nach einem der Ansprüche 1 bis 4, dadurch gekennzeichnet, daß das Werkzeug (20) am vorderen Ende ein Gehäuse (21) aufweist, das ein durch einen Motor (25) um eine Achse parallel zur Vortriebsrichtung des Werkzeugs exzentrisch rotierbares Gewicht (22) enthält.

6. Vorrichtung nach einem der Ansprüche 1 bis 4, dadurch gekennzeichnet, daß das Werkzeug (30) einen Brech- oder Zerreißkopf (31) aufweist, der durch einen von einem zweiten Hydraulikstößel (32) angetriebenen Körper (42) schlagbeaufschlagt wird.

7. Vorrichtung nach einem der Ansprüche 1 bis 4, dadurch gekennzeichnet, daß das Werkzeug (81, 93) eine Formation (83 ; 96) aufweist, die quer zur Vortriebsrichtung des Werkzeugs durch einen Keil (89 ; 99) hin und her bewegbar ist, der seinerseits durch einen weiteren doppelt-wirkenden Hydraulikstößel (87 ; 98) parallel zur genannten Vortriebsrichtung hin und her bewegbar ist.

8. Vorrichtung nach Anspruch 7, dadurch gekennzeichnet, daß die beiden Hydraulikstößel (3 ; 87 ; 98) mit Hydraulikflüssigkeit von einer gemeinsamen Lieferquelle (108, 109) her parallel beliefert werden und daß der erste Stößel (3) das Werkzeug (81, 93) vortreibt, während der zweite Stößel (87 ; 98) den Keil (89 ; 99) zurückzieht.

**Revendications**

1. Appareil destiné à effectuer un mouvement autopropulsé dans un passage, comprenant un outil (20, 30) avancé par des pieds (64, 65) appliqués alternativement à force contre la paroi du passage par des faces (69) de coins et déplacés le long de la paroi sous l'action d'un moyen à vérin hydraulique (3), caractérisé en ce que les pieds (64, 65) portent des faces respectives (69) de coins qui sont en contact de glissement entre elles et en ce qu'un ressort (71) maintient les pieds en contact avec la paroi du passage et maintient donc les faces de coins (69) en contact mutuel.

2. Appareil selon la revendication 1, caractérisé en ce que l'appareil comprend au moins trois éléments agencés en un train le long du passage et reliés entre eux par des liaisons pivotantes (67), l'élément avant étant un jeu de pieds (64, 65), l'élément intermédiaire étant un vérin hydraulique (3) à double effet et l'élément arrière étant un outil (20 ; 30 ; 81 ; 93).

3. Appareil selon la revendication 2, caractérisé en ce qu'il n'y a que trois éléments et le vérin (3) est relié directement à l'outil (20 ; 30 ; 81) et au seul jeu de pieds (63).

4. Appareil selon la revendication 2, caractérisé en ce qu'il y a quatre éléments, un second jeu de pieds (63) étant monté entre l'outil (20 ; 30 ; 81) et le vérin (3) auquel il est relié.

5. Appareil selon l'une quelconque des revendications précédentes, caractérisé en ce que l'outil (20) comporte, à son extrémité avant, un boîtier (21) qui contient un poids (22) qu'un moteur (25) peut faire tourner de façon excentrique autour d'un axe parallèle à la direction d'avance de l'outil.

6. Appareil selon l'une quelconque des revendications 1 à 4, caractérisé en ce que l'outil (30) comprend une tête (31) de rupture actionnée en percussion par un corps (42) entraîné par un second vérin hydraulique (32).

7. Appareil selon l'une quelconque des revendications 1 à 4, caractérisé en ce que l'outil (81, 93) comprend une formation (83 ; 96) pouvant exécuter un mouvement alternatif transversalement à la direction d'avance de l'outil sous l'effet d'un coin (89, 99) qu'un autre vérin hydraulique (87 ; 98) à double effet peut animer d'un mouvement alternatif parallèle à ladite direction.

8. Appareil selon la revendication 7, caractérisé en ce que les deux vérins hydrauliques (3 ; 87 ; 98) sont alimentés en parallèle en fluide hydraulique à partir d'une alimentation commune (108, 109) et en outre caractérisé en ce que le premier vérin (3) travaille de façon à faire avancer l'outil (81, 93) tandis que le second vérin (87 ; 98) travaille de façon à rétracter le coin (89 ; 99).

FIG.1A.

FIG.1B.

FIG.2.

0 149 528

FIG.3.

FIG.4.

FIG.5.

0 149 528

# FIG.6.

FIG.7.

0 149 528

FIG.7A.

FIG.8C.

FIG.8A.

FIG.8B.

0 149 528

# FIG. 9.

# FIG. 10.

FIG.11.